# EUROPÄISCHE PATENTSCHRIFT

(11) **EP 1 567 974 B1**
(45) Veröffentlichungstag und Bekanntmachung des Hinweises auf die Patenterteilung: **02.08.2006**
(21) Anmeldenummer: 03758063.6
(22) Anmeldetag: 24.10.2003
(51) Int. Cl.: G06K 15/12

(54) **VERFAHREN UND VORRICHTUNG ZUR ERZEUGUNG EINES LADUNGSBILDES DURCH BELICHTUNGSZEILEN, DEREN ABWEICHUNGEN VON EINER SOLLINIE MINIMIERT WERDEN**
METHOD AND DEVICE FOR PRODUCING A CHARGE IMAGE BY ILLUMINATION LINES WHOSE DEVIATIONS FROM A TARGET LINE ARE MINIMISED
PROCEDE ET DISPOSITIF POUR GENERER UNE IMAGE DE CHARGE A L'AIDE DE RANGEES D'ECLAIRAGE DONT LES ECARTS PAR RAPPORT A UNE LIGNE DE CONSIGNE SONT MINIMISES

(30) Priorität: 24.10.2002 DE 10249672
(43) Veröffentlichungstag der Anmeldung: 31.08.2005
(73) Patentinhaber: Océ Printing Systems GmbH, 85586 Poing (DE)
(72) Erfinder: GROEGER, Hans-Detlef, 85586 Poing (DE)
(74) Vertreter: Schaumburg, Thoenes, Thurn, Landskron
(86) Internationale Anmeldenummer: PCT/EP2003/011857
(87) Internationale Veröffentlichungsnummer: WO 2004/038510

(56) Entgegenhaltungen:
- EP-A- 0 971 310
- US-B1- 6 215 511

## Beschreibung

Die vorliegende Erfindung betrifft ein Verfahren und eine Vorrichtung zur Erzeugung eines Ladungsbildes auf einem Zwischenträger eines elektrophotographischen Druckers oder Kopierers mit Hilfe eines Zeichengenerators, der eine Mehrzahl von in mindestens einer Reihe angeordneten Lichtquellen hat, wobei die mindestens eine Lichtquellenreihe als eine Belichtungszeile auf den Zwischenträger abgebildet wird und der Zwischenträger im wesentlichen quer zur Belichtungszeile relativ zum Zeichengenerator bewegbar ist.

Aus EP 0 971 310 B1 ist ein Zeichengenerator mit einer Vielzahl von Lichtquellen, die in einer Reihe angeordnet sind, bekannt. Die Lichtquellenreihe wird als Belichtungszeile auf einen Zwischenträger eines Druckers oder Kopierers abgebildet und erzeugt dabei auf einer photoleitenden Beschichtung des Zwischenträgers eine Zeile eines latenten Ladungsbildes. Dabei ist jede Lichtquelle des Zeichengenerators zur Erzeugung eines Bildpunktes des Ladungsbildes vorgesehen, d.h. die Anordnungsdichte der Lichtquellen auf dem Zeichengenerator entspricht der Auflösung des Bildes.

Der Zwischenträger wird quer zur Belichtungszeilenrichtung relativ zum Zeichengenerator bewegt, so dass durch nacheinander abgebildete Belichtungszeilen ein zweidimensionales Ladungsbild auf dem Zwischenträger erzeugt wird. Dazu ist der Zwischenträger beispielsweise als Photoleitertrommel, die sich um ihre Mittelachse dreht, oder als umlaufendes Photoleiterband ausgebildet. Das Ladungsbild auf dem Zwischenträger wird auf bekannte Weise entwickelt und das entwickelte Bild auf einen Aufzeichnungsträger umgedruckt.

Da die Lichtquellen des Zeichengenerators unmittelbar in eine Belichtungszeile auf dem Zwischenträger abgebildet werden, führen mechanische Ungenauigkeiten sowohl bei der Ausrichtung des Zeichengenerators bezüglich des Zwischenträgers als auch innerhalb des Zeichengenerators (z.B. bei der Anordnung der Lichtquellen, der Optik oder aufgrund mechanischer Verspannungen) zu einer Abweichung der Belichtungszeile von einer Soll-Linie. Die zur Erzeugung eines zufriedenstellenden Druckbildes erforderliche Präzision im Aufbau und Einbau des Zeichengenerators erfordert einen erheblichen Aufwand und verursacht bei heutigen Druckern und Kopierern erhebliche Kosten.

Besonders hohe Anforderungen an die Präzision werden beim Farbdruck nach dem sogenannten "single pass"-Verfahren gestellt, bei dem ein Aufzeichnungsträger (z.B. ein einzelnes Blatt Papier oder Endlospapier) durch mehrere separate bildgebende Einheiten geführt wird, die jeweils eine Farbkomponente eines Farbbildes beitragen (z.B. rot/grün/blau oder cyan/magenta/gelb/schwarz). Jede dieser bildgebenden Einheiten hat einen Zeichengenerator der eingangs genannten Art. Wenn die Belichtungszeile eines oder mehrerer dieser Zeichengeneratoren von der zugehörigen Soll-Linie abweicht, werden die Farben nicht wie vorgesehen kombiniert, sondern es ergeben sich Farbverfälschungen, die sehr störend wirken.

Aus der US 6,215,511 B1 ist es grundsätzlich bekannt, mechanische Ungenauigkeiten eines Zeichengenerators durch eine geeignete Wahl des zeitlichen Beginns der Leuchtphasen einzelner Lichtquellengruppen zu korrigieren. Dazu werden im wesentlichen zwei Verfahren angegeben. In einem ersten Verfahren werden sämtliche Druckdaten einer Zeile periodisch in ein Latch-Register geschrieben und während einer Zeilenperiode, d.h. während des Zeitintervalls, das zum Schreiben einer Bildzeile auf dem Zwischenträger vorgesehen ist, konstant gehalten. Dann kann mit Hilfe von dem Latch-Register nachgeschalteten Verzögerungsschaltungen ("delay circuits") der zeitliche Beginn der Leuchtphase einer Lichtquellengruppe verschoben werden, um dadurch Abweichungen zwischen dem Teil der Bildzeile, der der Lichtquellengruppe entspricht, und einer Soll-Linie zu verringern. Jedoch kann diese Korrektur nur innerhalb der zeitlichen Grenzen einer solchen Zeilenperiode durchgeführt werden. Dies bedeutet einerseits, dass im Druckbild lediglich Korrekturen von weniger als einer Druckzeilenhöhe (d.h. einer Pixelhöhe) möglich sind. Zum anderen ist dieses Verfahren bei Druckern oder Kopierern mit hoher Verarbeitungsgeschwindigkeit und entsprechend kurzer Zeilenperiode nicht praktikabel, da dort die zum Belichten des Zwischenträgers benötigte Leuchtphasendauer bereits einen wesentlichen Anteil der Zeilenperiode ausmacht, so dass der Leuchtphasenbeginn innerhalb der Zeilenperiode nicht mehr wesentlich verschoben werden kann.

Bei dem zweiten Verfahren aus der oben genannten Druckschrift wird eine Druckzeilenkorrektur erreicht, indem Abschnitte verschiedener Druckzeilen von unterschiedlichen Lichtquellengruppen gleichzeitig belichtet werden. Das bedeutet, dass der Beginn der Leuchtphase einer Lichtquellengruppe nicht stufenlos verschoben werden kann, sondern nur in ganzzahligen Vielfachen einer Zeilenperiode. Nach diesem Verfahren können zwar im Prinzip große Druckbildabweichungen korrigiert werden, jedoch lediglich bis auf einen Zeilenabstand genau, was zu keiner vorteilhaften Druckbildqualität führt.

Weiterer Stand der Technik ist der US 6,201,596 B1 und der EP 0 367 550 A2 zu entnehmen.

Der Erfindung liegt die Aufgabe zugrunde, ein Verfahren und eine Vorrichtung anzugeben, die die Erzeugung eines Ladungsbildes hoher Qualität bei mäßigem Aufwand ermöglichen.

Diese Aufgabe wird erfindungsgemäß durch ein Verfahren mit den Merkmalen des Anspruchs 1 und durch eine Vorrichtung mit den Merkmalen des Anspruchs 10 gelöst. Vorteilhafte Weiterbildungen der Erfindung sind in den weiteren Ansprüchen angegeben.

Anstatt Abbildungsfehler durch immer höhere Präzision beim Aufbau und Einbau des Zeichengenerators zu minimieren, wird demnach vorgeschlagen, gewisse baulich bedingte Abbildungsfehler bewusst in Kauf zu nehmen und durch eine geeignete Wahl des zeitlichen Beginns der Leuchtphasen einzelner Lichtquellen oder von Gruppen von Lichtquellen zu korrigieren.

Um dies zu erreichen, ist für jede Lichtquellengruppe eine eigene Funktionseinheit zur Steuerung der Lichtquellen vorgesehen und werden die Lichtquellen einer jeden Gruppe durch eine der Funktionseinheit eigene Steuerungseinheit angesteuert. Durch die Verwendung einer eigenen Steuerungseinheit für jede der Lichtquellengruppen, können die Lichtquellengruppen vollständig voneinander unabhängig angesteuert werden, so dass der Zeichengenerator als eine Aneinanderreihung kleiner Elementerzeichengeneratoren aufgefasst wird, die jeweils eine Lichtquellengruppe umfassen. Somit können sämtliche von herkömmlichen Zeichengeneratoren bekannte Justierungsmaßnahmen, die die Leuchtintensität, die Leuchtphasendauer und den zeitlichen Beginn der Leuchtphase betreffen, bei dem Verfahren und der Vorrichtung' der Erfindung für jeden dieser Elementarzeichengeneratoren individuell durchgeführt werden. Insbesondere können die Steuereinheiten der Funktionseinheiten die Lichtquellengruppen unabhängig von einem Zeittakt ansteuern, der durch die für die Verarbeitung einer Druckzeile vorgesehene Zeilenperiode vorgegeben ist. Dies ist ein immenser Vorteil gegenüber der Vorrichtung und dem Verfahren aus dem oben zitierten US-Patent, bei der die Ansteuerung der Lichtquellengruppen starr an den Zeittakt der Zeilenperiode gekoppelt ist und somit entweder nur sehr geringe oder nur sehr grobe Variationen des Leuchtphasenbeginns möglich waren.

In einer vorteilhaften Weiterbildung sind die Funktionseinheiten mit einer zentralen Steuerungseinheit verbunden und sie besitzen eine Adresse, über die sie gezielt angesteuert werden können. In einer vorteilhaften Weiterbildung gibt die zentrale Steuerungseinheit der Steuerungseinheit einer jeden Funktionseinheit einen individuellen Startbefehl zum Ansteuern der zugehörigen Lichtquellengruppe, wobei der Zeitpunkt des Startbefehls so gewählt ist, dass eine Abweichung des der Lichtquellengruppe entsprechenden Belichtungszeilenabschnittes von der Soll-Linie minimiert wird.

Dieses Startsignal kann völlig unabhängig von den übrigen Lichtquellengruppen und unabhängig von der Verarbeitung und dem Einlesen der Druckbilddaten erfolgen. Dadurch wird erreicht, dass der Leuchtphasenbeginn der Lichtquellengruppe völlig frei wählbar ist. Es kann erreicht werden, dass der Schwerpunkt des entsprechend aufgezeichneten Bildpunktes in der Mitte der Zeilenhöhe einer Idealzeile liegt. Dadurch können insbesondere als Schwebungen ausgeprägte Bildfehler in homogenen Bildern vermieden werden.

Zum besseren Verständnis der vorliegenden Erfindung wird im folgenden auf das in den Zeichnungen dargestellte bevorzugte Ausführungsbeispiel Bezug genommen, das anhand spezifischer Terminologie beschrieben ist. Es sei jedoch darauf hingewiesen, dass der Schutzumfang der Erfindung dadurch nicht eingeschränkt werden soll, da derartige Veränderungen und weitere Modifizierungen an der gezeigten Vorrichtung und dem Verfahren sowie derartige weitere Anwendungen der Erfindung, wie sie darin aufgezeigt sind, als übliches derzeitiges oder künftiges Fachwissen eines zuständigen Fachmannes angesehen werden. Die Figuren zeigen neben einer Darstellung des Standes der Technik ein Ausführungsbeispiel der Erfindung, nämlich
- Figur 1: eine schematische Darstellung des Aufbaus und der Funktionsweise eines Zeichengenerators nach dem Stand der Technik,
- Figur 2: eine schematische Darstellung des Aufbaus und der Funktionsweise eines Zeichengenerators nach einer Weiterbildung der Erfindung und
- Figur 3: eine schematische Darstellung einer nach dem Stand der Technik erzeugten Belichtungszeile und einer nach einer Weiterbildung der Erfindung erzeugten Belichtungszeile.

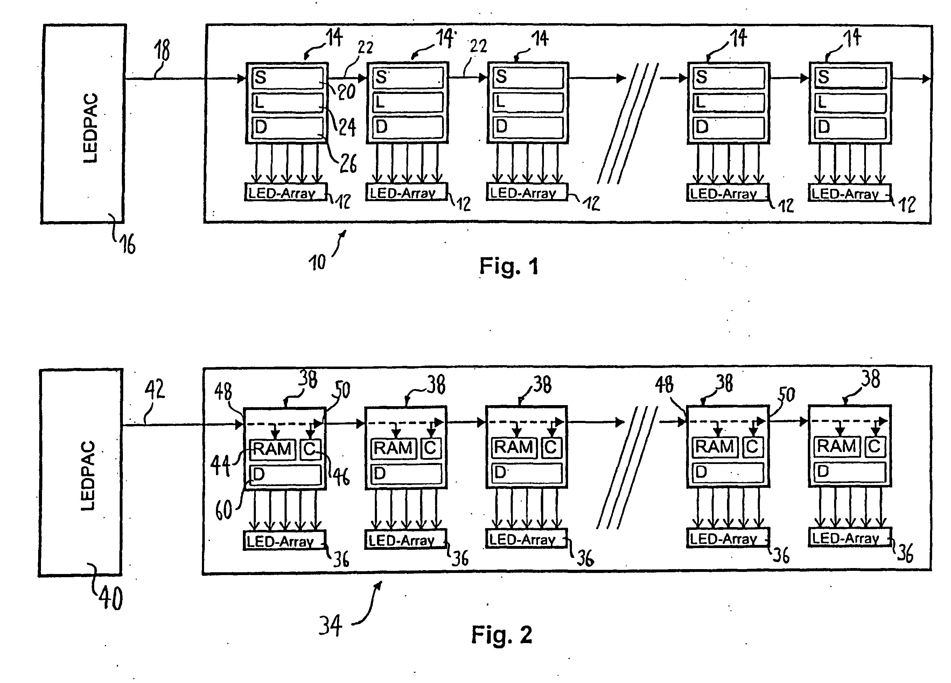

In Figur 1 ist der Aufbau eines aus dem Stand der Technik bekannten Zeichengenerators 10 schematisch dargestellt. Der Zeichengenerator 10 ist in der oben genannten EP 0 971 310 B1 im Detail beschrieben. Der Zeichengenerator 10 hat über eine Breite von 20,48 Zoll eine Lichtquellenreihe, die aus 12288 LEDs gebildet wird. Die LEDs werden beispielsweise über eine Selfoc-Optik in eine Belichtungszeile auf einen Zwischenträger abgebildet (nicht gezeigt), wobei jede LED zur Erzeugung eines Bildpunktes bestimmt ist. Aus der Anzahl der LEDs und der Länge der LED-Reihe ergibt sich eine Druckbildauflösung von 600 DPI (dot per inch).

Wie in Figur 1 schematisch dargestellt, besteht die LED-Reihe aus separaten LED-Gruppen 12 (LED-Arrays), die jeweils mit einer zugehörigen Funktionseinheit 14 zur Steuerung der LEDs verbunden sind. Die Funktionseinheit 14 wird im gezeigten Ausführungsbeispiel durch einen integrierten Schaltkreis gebildet. Der herkömmliche Zeichengenerator 10 von Figur 1 hat typischerweise 192 LED-Gruppen 12 mit jeweils 64 LEDs und einer zugehörigen Funktionseinheit 14. Ferner hat der Zeichengenerator 10 eine zentrale Steuerungseinheit 16 (LEDPAC, LED Print Array Controller) zur Steuerung des Zeichengenerators 10.

Im folgenden wird das herkömmliche Verfahren zur Erzeugung eines Ladungsbildes auf einem Zwischenträger mit Hilfe des herkömmlichen Zeichengenerators 10 kurz erläutert. Die zentrale Steuerungseinheit 16 sendet Druckdaten über eine Datenleitung 18 in ein Schieberegister 20 der ersten, d.h. in der Darstellung der Figur 1 am weitesten links angeordneten Funktionseinheit 14. Die Schieberegister 20 benachbarter Funktionseinheiten 14 sind durch Leitungen 22 miteinander verbunden, und die Druckdaten werden durch die Schieberegister 20 sämtlicher Funktionseinheiten 14 weitergereicht, bis das Schieberegister 20 der letzten (d.h. der in Figur 1 am weitesten rechts angeordneten) Funktionseinheit 14 mit Druckdaten gefüllt ist.

Die Druckdaten bestehen aus einem acht Bit langen Datenwort für jede LED des Zeichengenerators 10, das die Dauer der Leuchtphase der entsprechenden LED repräsentiert. Die Leuchtphasendauer ist dabei das Produkt zweier Faktoren, nämlich einer angestrebten Beleuchtungsstärke einerseits und eines Korrekturfaktors andererseits. Die angestrebte Beleuchtungsstärke kann im einfachsten Fall durch ein Ein-Bit-Signal (LED an oder LED aus) repräsentiert werden. Dies bezeichnet man als Bi-Level-Druck. Zur Erzeugung einer Vielzahl von Grautönen ist es jedoch von Vorteil, mehrere Beleuchtungsstärkegrade zur Verfügung zu stellen, d.h. Leuchtphasen unterschiedlicher Länge vorzusehen. Dieses Verfahren nennt man Multi-Level-Druck mit üblicherweise vier, acht oder 16 Beleuchtungsstärkegraden. Der Korrekturfaktor dient dazu, Schwankungen in der individuellen Leuchtkraft der LEDs, die sich infolge von Alterung oder Unregelmäßigkeiten bei der Herstellung ergeben, zu kompensieren.

Nachdem die Schieberegister 20 sämtlicher Funktionseinheiten 14 des Zeichengenerators 10 mit Druckdaten gefüllt sind, werden sie in einen Zwischenspeicher 24 (latch L) transferiert. Mit Hilfe eines Treibers 26 (driver D) werden dann die LEDs des zugehörigen LED-Arrays 12 gleichzeitig eingeschaltet und nach Verstreichen der entsprechenden, im Zwischenspeicher 24 abgelegten Leuchtphasendauer wieder ausgeschaltet (bei einer Leuchtphasendauer der Länge 0 wird die entsprechende LED gar nicht erst angeschaltet). Während der Leuchtphase der LEDs werden die Druckdaten zur Belichtung der folgenden Zeile in die Schieberegister 20 sämtlicher Funktionseinheiten 14 eingebracht. Nähere Einzelheiten zu Aufbau und Funktion der Funktionseinheiten 14 finden sich in der oben genannten EP 0 971 310 B1 und sollen hier nicht weiter ausgeführt werden.

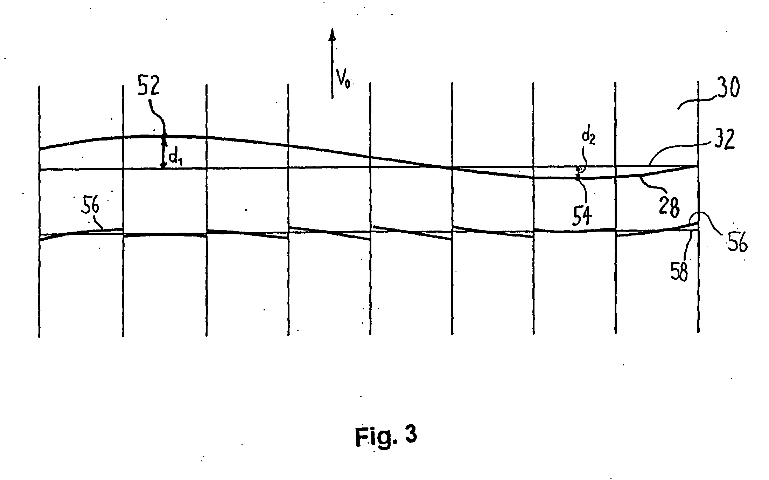

Die LED-Reihe des Zeichengenerators 10 wird mit Hilfe einer bekannten Selfoc-Optik (nicht gezeigt) als eine Belichtungszeile 28 auf einen Zwischenträger 30 abgebildet (siehe Figur 3), der sich mit einer Geschwindigkeit v₀ in Richtung des in Fig. 3 gezeigten Geschwindigkeitspfeils relativ zum Zeichengenerator 10 bewegt.

Aufgrund mechanischer Ungenauigkeiten beim Aufbau des Zeichengenerators 10 oder beim Einbau des Zeichengenerators 10 in einen Drucker oder Kopierer kann die Belichtungszeile 28 von einer Soll-Linie 32 abweichen. In der schematischen Darstellung von Figur 3 kennzeichnen die vertikalen Linien die Grenzen der LED-Arrays 12, d.h. die Abschnitte der Belichtungszeile 28, die sich zwischen zwei vertikalen Linien befinden, werden durch genau ein LED-Array erzeugt. Der Einfachheit halber ist die Belichtungszeile 28 in der vereinfachten Darstellung von Figur 3 nur in acht Abschnitte unterteilt, d.h. der dieser vereinfachten Darstellung entsprechende Zeichengenerator würde über lediglich acht LED-Arrays verfügen.

Die Abweichungen der Belichtungszeile 28 von der Soll-Linie 32 können beim herkömmlichen Zeichengenerator 10 nur durch enormen mechanischen Aufwand gering gehalten werden. Typisch sind insbesondere kontinuierliche, glatte Abweichungen der Belichtungszeile 28 von der Soll-Linie 32, wie in Figur 3 skizziert, die sich beispielsweise aus einer Verspannung oder einem Durchhängen des Zeichengenerators 12 ergeben. Solche Verformungen können nur sehr schwer durch Nachjustierung behoben werden.

Beim Schwarzweißdruck wird eine einigermaßen glatte, gleichmäßige Abweichung der Belichtungszeile 28 von der Soll-Linie 32 im entstehenden Druckbild möglicherweise nicht als störend empfunden, weil sie mit dem bloßen Auge nicht ohne weiteres zu erkennen ist. Beim "single-pass"-Farbdruck hingegen, bei dem mehrere Zeichengeneratoren zur Erzeugung der Farbkomponenten eines Farbbildes beitragen, führen derartigen Abweichungen zu einer Störung der Farbkonvergenz und sind absolut inakzeptabel.

In Figur 2 ist ein Zeichengenerator 34 nach einer Weiterbildung der vorliegenden Erfindung gezeigt. Ähnlich wie der Zeichengenerator 10 aus dem Stand der Technik werden beim Zeichengenerator 34 die Lichtquellen durch LED-Gruppen 36 (LED-Arrays) gebildet, die über eine zugehörige Funktionseinheit 38 angesteuert werden. Auch der Zeichengenerator 34 verfügt über eine zentrale Steuerungseinheit 40. Der wesentliche Unterschied zum Stand der Technik besteht im Aufbau der Funktionseinheiten 38 und im Betrieb des Zeichengenerators 34, wie im folgenden beschrieben wird.

Anstelle der Schieberegister 20 verfügt der Zeichengenerator 34 über einen internen BUS 42 und einen flüchtigen Speicher (RAM 44). Außerdem hat jede Funktionseinheit 38 des Zeichengenerators 34 eine eigene Steuerungseinheit (controller C) 46. Der interne Daten-Bus 42 hat sechzehn Datenleitungen und optional eine siebzehnte Kommandoleitung. Er ist insofern ein interner Bus, als er lediglich eine Verbindung zwischen den Funktionseinheiten 38 herstellt, die somit operativ in einer Reihe angeordnet sind. Jede Funktionseinheit 38 hat eine Eingabeschnittstelle 48, über die sie Daten und ein Taktsignal von der in der Reihe voranstehenden (in Fig. 2 links stehenden) Funktionseinheit empfangen kann, und eine Ausgabeschnittstelle 50, über die die Funktionseinheit 38 Daten und ein Taktsignal an die in der Reihe folgende (in Fig. 2 rechtsstehende) Funktionseinheit weitergeben kann. Zwischen Empfang und Weitergabe von Daten durch eine Funktionseinheit 38 liegt ein Systemtakt, in dem das Taktsignal wiederhergestellt wird. Jede Funktionseinheit 38 hat eine Adresse und einen Adressendecodierer (nicht gezeigt), so dass sie gezielt angesprochen werden kann.

Im folgenden wird die Funktionsweise des Zeichengenerators 34 erläutert. Die zentrale Steuerungseinheit 40 sendet über den internen Bus 42 die Druckdaten an die betreffende Funktionseinheit 38. Dazu dient ein spezielles Datenprotokoll, das neben Datenpaketen auch Kontrollinformationen übertragen kann. Zu derartigen Kontrollinformationen gehört unter anderem die Adresse derjenigen Funktionseinheit 38, für die das Datenpaket bestimmt ist. Die Daten und Kontrollinformationen werden wie oben beschrieben durch sämtliche Funktionseinheiten 38 hindurchgereicht. Wenn dabei eine Funktionseinheit 38 anhand der in den Kontrollinformationen enthaltenen Adresse erkennt, dass die Daten für sie bestimmt sind, legt sie diese in ihrem Speicher 44 ab.

Die Druckdaten sind im wesentlichen mit denjenigen vom Zeichengenerator 10 des Standes der Technik identisch. Allerdings werden beim Zeichengenerator 34 nur die angestrebten Beleuchtungsstärken für eine jede LED benötigt, nicht aber deren Korrekturfaktor, der ja vom Druckbild unabhängig ist. Die Korrekturfaktoren sind statt dessen im Speicher 44 gespeichert. Dadurch verringert sich die zum Drucken einer Zeile benötigte Datenmenge erheblich.

Der Hauptunterschied der Funktion des Zeichengenerators 34 gegenüber dem herkömmlichen Zeichengenerator besteht darin, dass nicht nur die Länge der Leuchtphasen der LEDs individuell gesteuert wird, sondern, zumindest gruppenweise, auch deren Beginn. Die zentrale Steuerungseinheit 40 gibt für jede LED-Gruppe 36 den Beginn der Leuchtphase der LEDs vor. Das bedeutet, dass die Leuchtphasen aller Lichtquellen innerhalb einer Gruppe durch eine gemeinsame Ansteuerung (in diesem Fall durch die zentrale Steuerungseinheit 40) initiiert werden.

Da sich der Zwischenträger 30 relativ zum Zeichengenerator bewegt, bewirkt eine zeitliche Verschiebung der Leuchtphase eine räumliche Verschiebung des entsprechenden Abschnittes der Belichtungszeile 28 auf dem Zwischenträger 30. Diese Verschiebung wird ausgenutzt, um Abweichungen der Belichtungszeile 28 von der Soll-Linie 32 zu minimieren.

Das Verfahren wird unter Bezugnahme auf Figur 3 näher erläutert. Zunächst sei festgestellt, dass die Leuchtphasen bezogen auf die Geschwindigkeit v₀, mit der sich der Zwischenträger 30 relativ zum Zeichengenerator 34 bzw. 10 bewegt, extrem kurz sind, da das Ladungsbild ja sonst verwischen würde. Zur Erläuterung des Verfahrens betrachten wir zwei exemplarische Punkte 52 und 54 der Belichtungszeile 28 von Figur 3. Die Belichtungspunkte 52 und 54 sind "gleichzeitig" erzeugt worden, d.h. die Leuchtphasen der beiden entsprechenden LEDs begann zum gleichen Zeitpunkt, im folgenden Referenzzeitpunkt genannt, und die Dauer der Leuchtphasen sind in diesem Zusammenhang vernachlässigbar.

Wie Figur 3 zu entnehmen, ist der Belichtungspunkt 52 gegenüber der Soll-Linie 32 um eine Strecke d₁ in Richtung der Relativgeschwindigkeit v₀ des Zwischenträgers 30 relativ zum Zeichengenerator 10 bzw. 34 versetzt. Das bedeutet, dass der Belichtungspunkt 52 auf der Soll-Linie läge, wenn die entsprechende LED um eine Zeit t₁ = d₁/ v₀ nach dem Referenzzeitpunkt angeschaltet worden wäre. Der Belichtungspunkt 54 hingegen ist gegenüber der Soll-Linie 32 um eine Strecke d₂ entgegen der Richtung der Geschwindigkeit v₀ versetzt. Demnach kann die Abweichung des Belichtungspunktes 54 von der Soll-Linie 32 dadurch korrigiert werden, dass die Leuchtphase der entsprechenden LED um t₂ = d₂/v₀ gegenüber dem Referenzzeitpunkt vorverlegt wird.

Auf diese Weise läßt sich im Prinzip die Abweichung eines jeden Belichtungspunktes von der Soll-Linie 32 korrigieren. Um den Aufwand sowohl der Steuerungslogik als auch die Menge der zu übertragenden Daten zu begrenzen, ist es von Vorteil statt für jede LED einzeln den Beginn der Beleuchtungsphase für sämtliche LEDs einer LED-Gruppe 36 im Rahmen einer gemeinsamen Ansteuerung vorzugeben. In der Regel bedeutet dies, dass die Leuchtphasen der LEDs einer Gruppe im wesentlichen gleichzeitig beginnen.

Das Ergebnis dieses Verfahrens ist in der Belichtungszeile 56 gezeigt, die im Prinzip der Belichtungszeile 28 entspricht, außer dass der zeitliche Beginn der Leuchtphase für eine jede LED-Gruppe 36 so gewählt wurde, dass der entsprechende Abschnitt der Leuchtzeile 56 möglichst wenig von der Soll-Linie 58 abweicht.

Beim Zeichengenerator 34 von Figur 2 schickt die zentrale Steuerungseinheit 40 das Signal zum Beginn der Leuchtphase einer jeden LED-Gruppe 36 an die entsprechende Funktionseinheit 38. Bei Empfang des Signals veranlaßt die der Funktionseinheit 38 eigene Steuerungseinheit 46 den Beginn der Leuchtphase mit Hilfe eines Treibers 60, der sich nicht wesentlich vom Treiber 26 des herkömmlichen Zeichengenerators 10 unterscheidet.

Wie in Figur 3 zu sehen, entstehen Diskontinuitäten in der Belichtungszeile 56, wenn sich der zeitlichen Beginn der Leuchtphase benachbarter LED-Gruppen 36 unterscheidet. Das bedeutet, dass sich der zeitliche Beginn der Leuchtphasen bei benachbarten LED-Gruppen nicht zu stark unterscheiden darf, weil ansonsten Diskontinuitäten im Druckbild sichtbar würden. Um einen Eindruck von der Größenordnung der Korrekturen zu bekommen, die man mit dem Zeichengenerator 34 und dem vorgestellten Verfahren erreichen kann, stellen wir uns vor, dass die Belichtungszeile bei gleichzeitigem Beginn aller Leuchtphasen schräg zur Soll-Linie steht. Wenn man einen Versatz von einer halben Pixelgröße an den Grenzen der Belichtungszeilenabschnitte toleriert, erhält man bei 192 LED-Gruppen und einer Pixelgröße von 1/600 Zoll einen ausgleichbaren Gesamtversatz der Enden des Zeichengenerators 34 von 4,06 mm, was ein Vielfaches der Ungenauigkeit darstellt, mit der man üblicherweise zu tun hat.

Durch die zeitliche Verschiebung der Leuchtphasen ergibt sich, dass der Zeichengenerator gleichzeitig Abschnitte von unterschiedlichen Belichtungszeilen erzeugt. Wenn man wiederum einen räumlichen Versatz an den Abschnittsgrenzen einer Belichtungszeile von einer halben Pixelgröße toleriert, werden bei dem obigen Beispiel des schrägstehenden Zeichengenerators Abschnitte von halb so vielen Zeilen gleichzeitig gedruckt, wie der Zeichengenerator 34 LED-Gruppen 36 hat. Beim gezeigten Ausführungsbeispiel des Zeichengenerators 34 von Figur 2 bedeutet dies, dass gleichzeitig Abschnitte von 96 unterschiedlichen Druckzeilen generiert werden. Daher sollte der Speicher 44 Platz für die Druckdaten von mindestens 96 Zeilen haben.

Beim gezeigten Ausführungsbeispiel wird der Beginn der Leuchtphase einer jeden LED-Gruppe von der zentralen Steuerungseinheit 40 vorgegeben. Da der zeitliche Versatz des Leuchtphasenbeginnes einer jeden LED-Gruppe 36, der die Abweichung des entsprechenden Abschnittes der Belichtungszeile 56 von der Soll-Linie 58 minimiert, von den Druckdaten unabhängig ist, könnte dieser auch im Speicher 44 einer jeden Funktionseinheit 38 gespeichert werden, und die Ansteuerung der LED-Gruppe 36 könnte von der Steuerungseinheit 46 mit geeignetem Versatz gegenüber einem Referenzzeitpunkt veranlaßt werden.

Obgleich in den Zeichnungen und der vorhergehenden Beschreibung ein bevorzugtes Ausführungsbeispiel aufgezeigt und detailliert beschrieben ist, sollte dies als rein beispielhaft und die Erfindung nicht einschränkend angesehen werden. Es wird darauf hingewiesen, dass nur das bevorzugte Ausführungsbeispiel dargestellt und beschrieben ist und sämtliche Veränderungen und Modifizierungen, die derzeit und künftig im Schutzumfang der Erfindung liegen, geschützt werden sollen.

### Bezugszeichenliste

- 10: Zeichengenerator
- 12: LED-Gruppe
- 14: Funktionseinheit
- 16: zentrale Steuerungseinheit
- 18: Datenleitung
- 20: Schieberegister
- 22: Leitung
- 24: Zwischenspeicher
- 26: Treiber
- 28: Belichtungszeile
- 30: Zwischenträger
- 32: Soll-Linie
- 34: Zeichengenerator
- 36: LED-Gruppe
- 38: Funktionseinheit
- 40: zentrale Steuerungseinheit
- 42: interner Daten-Bus
- 44: flüchtiger Speicher
- 46: Steuerungseinheit
- 48: Eingabeschnittstelle
- 50: Ausgabeschnittstelle
- 52: Belichtungspunkt
- 54: Belichtungspunkt
- 56: Belichtungszeile
- 58: Soll-Linie
- 60: Treiber

## Patentansprüche

1. Verfahren zur Erzeugung eines Ladungsbildes auf einem Zwischenträger (30) eines elektrophotographischen Druckers oder Kopierers,
bei dem ein Zeichengenerators (34) mit einer Mehrzahl von in mindestens einer Reihe angeordneten Lichtquellen (36) verwendet wird,
bei dem die mindestens eine Lichtquellenreihe als eine Belichtungszeile (56) auf den Zwischenträger (30) abgebildet wird und der Zwischenträger (30) im wesentlichen quer zur Belichtungszeile relativ zum Zeichengenerator bewegt wird und
bei dem der zeitliche Beginn der Leuchtphasen von Gruppen (36) von Lichtquellen so gewählt wird, dass Abweichungen der Belichtungszeile (56) von einer Soll-Linie (58) minimiert werden,
wobei für jede Lichtquellengruppe (36) eine eigene Funktionseinheit (38) zur Steuerung der Lichtquellen vorgesehen ist,
wobei jede Funktionseinheit (38) mit einer zentralen Steuerungseinheit (40) verbunden ist, einen Adressendekodierer umfasst, eine Adresse besitzt, über die sie gezielt angesteuert wird, und eine Steuerungseinheit (46) umfasst,
und wobei die Lichtquellen einer jeden Gruppe (36) durch die der Funktionseinheit (38) eigene Steuerungseinheit (46) angesteuert werden.

2. Verfahren nach Anspruch 1, bei dem die Steuerungseinheiten (46) der Funktionseinheiten (38) die Lichtquellengruppen (36) unabhängig von einem Zeittakt ansteuern, der durch eine für die Verarbeitung einer Druckseite vorgesehene Zeilenperiode vorgegeben ist.

3. Verfahren nach einem der vorhergehenden Ansprüche, bei dem die Steuerungseinheit (46) einer jeden Funktionseinheit (38) von der zentralen Steuerungseinheit (40) angesteuert wird, um die Leuchtphase der zugehörigen Lichtquellengruppe (36) zu initiieren.

4. Verfahren nach Anspruch 3, bei dem die zentrale Steuerungseinheit (40) der Steuerungseinheit (46) einer jeden Funktionseinheit (38) einen individuellen Startbefehl zum Ansteuern der zugehörigen Lichtquellengruppe (36) gibt, wobei der Zeitpunkt des Startbefehls so gewählt ist, dass eine Abweichung des der Lichtquellengruppe (36) entsprechenden Belichtungszeilenabschnittes von der Soll-Linie (58) minimiert wird.

5. Verfahren nach einem der vorhergehenden Ansprüche, bei dem die Funktionseinheiten (38) operativ in einer Reihe angeordnet sind, über eine Eingabeschnittstelle (48) Daten und/oder ein Taktsignal empfangen und diese/ dieses, falls es sich nicht um die letzte Funktionseinheit der Reihe handelt, über eine Ausgabeschnittstelle (50) an die in der Reihe folgende Funktionseinheit (38) weitergeben.

6. Verfahren nach Anspruch 5, bei dem zwischen dem Empfang und dem Weiterleiten der Daten und/oder des Taktsignals ein Systemtakt liegt, in dem das Taktsignal wiederhergestellt wird.

7. Verfahren nach einem der vorhergehenden Ansprüche, bei dem Daten in einem der Funktionseinheit (38) eigenen flüchtigen Speicher (44) abgelegt werden.

8. Verfahren nach Anspruch 7, bei dem die Daten die Druckdaten für die der Lichtquellengruppe (36) entsprechenden Abschnitte mehrerer zu druckender Zeilen umfassen.

9. Verfahren nach Anspruch 7 oder 8, bei dem die Daten einen Korrekturparameter für jede Lichtquelle der Gruppe (36) umfassen, der ihre individuelle Leuchtkraft repräsentiert.

10. Vorrichtung zur Erzeugung eines Ladungsbildes auf einem Zwischenträger (30) eines elektrophotographischen Druckers oder Kopierers,
mit einem Zeichengenerator (34), der eine Mehrzahl von in mindestens einer Reihe angeordneten Lichtquellen hat,
bei der die mindestens eine Lichtquellenreihe als eine Belichtungszeile (56) auf den Zwischenträger (30) abgebildet wird und der Zwischenträger (30) im wesentlichen quer zur Belichtungszeile (56) relativ zum Zeichengenerator (34) bewegbar ist und
bei der der zeitliche Beginn der Leuchtphasen von Gruppen (36) von Lichtquellen so wählbar ist, dass Abweichungen der Belichtungszeile (56) von einer Soll-Linie (58) minimiert werden,
wobei für jede Lichtquellengruppe (36) eine eigene Funktionseinheit (38) zur Steuerung der Lichtquellen vorgesehen ist,
wobei jede Funktionseinheit (38) mit einer zentralen Steuerungseinheit (40) verbunden ist, einen Adressendekodierer umfasst, eine Adresse besitzt, über die sie gezielt angesteuert werden kann, und eine Steuerungseinheit (46) umfasst,
und wobei die Lichtquellen einer jeden Gruppe (36) durch die der Funktionseinheit (38) eigene Steuerungseinheit (46) angesteuert werden.

11. Vorrichtung nach Anspruch 10, bei der die Lichtquellengruppen (36) jeweils durch die Steuerungseinheit (46) der zugehörigen Funktionseinheit (38) unabhängig von einem Zeittakt ansteuerbar sind, der durch eine für die Verarbeitung einer Druckzeile vorgesehene Zeilenperiode vorgegeben ist.

12. Vorrichtung nach Anspruch 10 oder 11, bei der die Steuerungseinheit (46) einer jeden Funktionseinheit (38) von der zentralen Steuerungseinheit (40) ansteuerbar ist, um die Leuchtphase der zugehörigen Lichtquellengruppe (36) zu initiieren.

13. Vorrichtung nach Anspruch 12, bei der die zentrale Steuerungseinheit (40) so programmiert ist, dass sie der Steuerungseinheit (46) einer jeden Funktionseinheit (38) einen individuellen Startbefehl zum Ansteuern der zugehörigen Lichtquellengruppe (36) gibt, wobei der Zeitpunkt des Startbefehls so gewählt ist, dass eine Abweichung des der Lichtquellengruppe entsprechenden Belichtungszeilenabschnittes von der Soll-Linie (58) minimiert wird.

14. Vorrichtung nach einem der Ansprüche 10 bis 13, bei der die Funktionseinheiten (38) operativ in einer Reihe angeordnet sind, wobei die Funktionseinheiten (38) eine Eingabeschnittstelle (48) zum Empfangen von Daten und/oder einem Taktsignal haben und wobei die Funktionseinheiten (38), mit Ausnahme der letzten Funktionseinheit (38) der Reihe, eine Ausgabeschnittstelle (50) zum Weitergeben der Daten und/oder des Taktsignals an die in der Reihe folgende Funktionseinheit (38) haben.

15. Vorrichtung nach einem der Ansprüche 10 bis 14, bei dem die Funktionseinheiten (38) einen flüchtigen Speicher (44) haben.

## Claims

1. Method for producing a charge image on an intermediate carrier (30) of an electrophotographic printer or copier,
in which a character generator (34) having a multiplicity of light sources (36) arranged in at least one row is used,
in which the at least one row of light sources is imaged onto the intermediate carrier (30) as an exposure line (56), and the intermediate carrier (30) is displaced essentially transverse to the exposure line relative to the character generator, and
in which the temporal beginning of the illumination phases of groups (36) of light sources is selected such that deviations of the exposure line (56) from a target line (58) are minimized,
a separate functional unit (38) being provided for each light source group (36) for the controlling of the light sources,
each functional unit (38) being connected to a central control unit (40), comprising an address decoder, having an address via which it is controlled in targeted fashion, and comprising a control unit (46),
and the light sources of each group (36) being controlled by the control unit (46) assigned separately to the functional unit (38).

2. Method according to claim 1, in which the control units (46) of the functional units (38) control the light source groups (36) independently of a clock pulse that is predetermined by a line period provided for the processing of a printed page.

3. Method according to one of the preceding claims, wherein the control unit (46) of each functional unit (38) is controlled by the central control unit (40), in order to initiate the illumination phase of the associated light source group (36).

4. Method according to claim 3, in which the central control unit (40) of the control unit (46) of each functional unit (38) gives an individual start command for controlling the associated light source group (36), the time of the start command being selected such that a deviation of the exposure line segment corresponding to the light source group (36) from the target line (58) is minimized.

5. Method according to one of the preceding claims, in which the functional units (38) are arranged operatively in a row, and receive data and/or a clock signal via an input interface (48) and, except for the last functional unit in the row, forward these data and/or this signal to the next functional unit (38) in the row via an output interface (50).

6. Method according to claim 5, in which between the reception and the forwarding of the data and/or the clock signal there is situated a system clock in which the clock signal is reproduced.

7. Method according to one of the preceding claims, in which data are stored in a volatile memory (44) that is separately assigned to the functional unit (38).

8. Method according to claim 7, in which the data comprise the print data for the segments, corresponding to the light source group (36), of a plurality of lines to be printed.

9. Method according to claim 7 or 8, in which the data comprise a correction parameter for each light source of the group (36) that represents its individual illumination intensity.

10. Device for producing a charge image on an intermediate carrier (30) of an electrophotographic printer or copier,
having a character generator (34) that has a multiplicity of light sources arranged in at least one row,
in which the at least one light source row is imaged as an exposure line (56) onto the intermediate carrier (30), and the intermediate carrier (30) can be displaced essentially transverse to the exposure line (56) relative to the character generator (34), and
in which the temporal beginning of the illumination phases of groups (36) of light sources can be selected such that deviations of the exposure line (56) from a target line (58) are minimized,
a separate functional unit (38) being provided for each light source group (36) for the controlling of the light sources,
each functional unit (38) being connected to a central control unit (40), comprising an address decoder, having an address via which it can be controlled in targeted fashion, and comprising a control unit (46),
and the light sources of each group (36) being controlled by a control unit (46) assigned separately to the functional unit (38).

11. Device according to claim 10, in which the light source groups (36) can each be controlled by the control unit (46) of the associated functional unit (38), independently of a clock pulse that is predetermined by a line period provided for the processing of a print line.

12. Device according to claim 10 or 11, in which the control unit (46) of each functional unit (36) can be controlled by the central control unit (40) in order to initiate the illumination phase of the associated light source group (36).

13. Device according to claim 12, in which the central control unit (40) is programmed in such a way that it gives the control unit (46) of each functional unit (38) an individual start command for controlling the associated light source group (36), the time of the start command being selected such that a deviation of the exposure line segment corresponding to the light source group from the target line (58) is minimized.

14. Device according to one of the claims 10 to 13, in which the functional units (38) are arranged operatively in a row, the functional units (38) having an input interface (48) for receiving data and/or a clock signal, and the functional units (38), with the exception of the last functional unit (38) in the row, having an output interface (50) for forwarding the data and/or the clock signal to the following functional unit (38) in the row.

15. Device according to one of the claims 10 to 14, in which the functional units (38) have a volatile memory (44).

## Revendications

1. Procédé de production d'une image de charge sur un support intermédiaire (30) d'un photocopieur ou d'une imprimante électrophotographique,
dans lequel un générateur de signes (34) est utilisé avec une pluralité de sources lumineuses (36) disposées selon au moins une rangée,
dans lequel ladite au moins une rangée de sources lumineuses est représentée sous la forme d'une ligne d'exposition (56) sur le support intermédiaire (30), et le support intermédiaire (30) est déplacé sensiblement transversalement à la ligne d'exposition par rapport au générateur de signes, et
dans lequel le début temporel des phases d'éclairage par les groupes (36) de sources lumineuses est choisi de telle sorte que l'écart entre la ligne d'exposition (56) et une ligne théorique (58) est réduit au minimum,
moyennant quoi, pour chaque groupe de sources lumineuses (36), il est prévu une unité fonctionnelle propre (38) pour piloter les sources lumineuses,
moyennant quoi chaque unité fonctionnelle (38) est reliée à une unité pilote centrale(40), comprend un décodeur d'adresses, possède une adresse par laquelle elle est pilotée de manière ciblée, et comprend une unité pilote (46),
et moyennant quoi les sources lumineuses de chaque groupe (36) sont pilotées par l'unité pilote (46) propre à l'unité fonctionnelle (38).

2. Procédé selon la revendication 1, dans lequel les unités pilotes (46) des unités fonctionnelles (38) pilotent les groupes de sources lumineuses (36) indépendamment d'une cadence, qui est prédéfinie par la période de ligne prévue pour traiter une page d'impression.

3. Procédé selon l'une quelconque des revendications précédentes, dans lequel l'unité pilote (46) de chaque unité fonctionnelle (38) est pilotée par l'unité pilote centrale (40), afin de déclencher la phase d'éclairage du groupe de sources lumineuses (36) associé.

4. Procédé selon la revendication 3, dans lequel l'unité pilote centrale (40) de l'unité pilote (46) de chaque unité fonctionnelle (38) donne une instruction de départ individuelle pour piloter le groupe de sources lumineuses associé (36), moyennant quoi l'instant de l'instruction de départ est choisi de telle sorte que l'écart entre la section de ligne d'exposition correspondant au groupe de sources lumineuses (36), et la ligne théorique (58), est réduit au minimum.

5. Procédé selon l'une quelconque des revendications précédentes, dans lequel les unités fonctionnelles (38) sont disposées de manière fonctionnelle selon une rangée, reçoivent un signal de synchronisation et/ou des données par l'intermédiaire d'une interface d'entrée (48), et, au cas où il ne s'agit pas de la dernière unité fonctionnelle de la rangée, retransmettent ces données / ce signal, par l'intermédiaire d'une interface de sortie (50), à l'unité fonctionnelle (38) suivante dans la rangée.

6. Procédé selon la revendication 5, dans lequel, entre la réception et la retransmission des données et/ou du signal de synchronisation, il existe une cadence système selon laquelle le signal de synchronisation est rétabli.

7. Procédé selon l'une quelconque des revendications précédentes, dans lequel les données sont enregistrées dans une mémoire volatile (44) propre à l'unité fonctionnelle (38).

8. Procédé selon la revendication 7, dans lequel les données comprennent les données d'impression pour les sections correspondant au groupe de sources lumineuses (36) de plusieurs lignes à imprimer.

9. Procédé selon l'une quelconque des revendications 7 ou 8, dans lequel les données comprennent un paramètre de correction pour chaque source lumineuse du groupe (36), qui représente son pouvoir éclairant individuel.

10. Dispositif de production d'une image de charge sur un support intermédiaire (30) d'un photocopieur ou d'une imprimante électrophotographique,
avec un générateur de signes (34) qui comporte une pluralité de sources lumineuses disposées selon au moins une rangée,
dans lequel ladite au moins une rangée de sources lumineuses est représentée sous la forme d'une ligne d'exposition (56) sur le support intermédiaire (30), et le support intermédiaire (30) peut être déplacé sensiblement transversalement à la ligne d'exposition (56) par rapport au générateur de signes (34), et
dans lequel le début temporel des phases d'éclairage par les groupes (36) de sources lumineuses peut être choisi de telle sorte que l'écart entre la ligne d'exposition (56) et une ligne théorique (58) est réduit au minimum,
moyennant quoi, pour chaque groupe de sources lumineuses (36), il est prévu une unité fonctionnelle (38) propre pour piloter les sources lumineuses,
moyennant quoi chaque unité fonctionnelle (38) est reliée à une unité pilote centrale (40), comprend un décodeur d'adresses, possède une adresse par l'intermédiaire de laquelle elle peut être pilotée de manière ciblée, et comprend une unité pilote (46),
et moyennant quoi les sources lumineuses de chaque groupe (36) sont pilotées par l'unité pilote (46) propre à l'unité fonctionnelle (38).

11. Dispositif selon la revendication 10, dans lequel les groupes de sources lumineuses (36) sont pilotés respectivement par l'unité pilote (46) de l'unité fonctionnelle associée (38) indépendamment d'une cadence, qui est prédéfinie par une période de ligne prévue pour traiter une ligne d'impression.

12. Dispositif selon l'une quelconque des revendications 10 ou 11, dans lequel l'unité pilote (46) de chaque unité fonctionnelle (38) peut être pilotée par l'unité pilote centrale (40), afin de déclencher la phase d'éclairage du groupe de sources lumineuses (36) associé.

13. Dispositif selon la revendication 12, dans lequel l'unité pilote centrale (40) est programmée de telle sorte qu'elle donne à l'unité pilote (46) de chaque unité fonctionnelle (38) une instruction de départ individuelle pour piloter le groupe de sources lumineuses (36) associé, moyennant quoi l'instant de l'instruction de départ est choisi de telle sorte que l'écart entre la section de ligne d'exposition correspondant au groupe de sources lumineuses, et la ligne théorique (58), est réduit au minimum.

14. Dispositif selon l'une quelconque des revendications 10 à 13, dans lequel les unités fonctionnelles (38) sont disposées de manière fonctionnelle selon une rangée, moyennant quoi les unités fonctionnelles (38) comportent une interface d'entrée (48) permettant de recevoir des données et/ou un signal de synchronisation, et moyennant quoi les unités fonctionnelles (38), à l'exception de la dernière unité fonctionnelle (38) de la rangée, comportent une interface de sortie (50) permettant de retransmettre les données et/ou le signal de synchronisation à l'unité fonctionnelle (38) suivante dans la rangée.

15. Dispositif selon l'une quelconque des revendications 10 à 14, dans lequel les unités fonctionnelles (38) comportent une mémoire volatile (44).
